# EUROPEAN PATENT APPLICATION

(11) **EP 4 531 301 A1**
(43) Date of publication of application: **02.04.2025**
(21) Application number: 24155780.0
(22) Date of filing: 05.02.2024
(51) Int. Cl.: H04B 7/185

(54) **AIRBORNE SATELLITE CONNECTIVITY SYSTEM**

(30) Priority: 29.09.2023 US 202318478284
(71) Applicant: The Boeing Company, Arlington, VA 22202 (US)
(72) Inventor: Navarro, Julio, Arlington 22202 (US)
(74) Representative: Arnold & Siedsma

(57) **Abstract**

An aircraft satellite communications system (203, 302, 401,600) that communicates using satellite frequency bands (202). The aircraft satellite communications system (203, 302, 401, 600) comprises a base structure (210, 310, 610), transmitters (211), and receivers (212). The base structure (210, 310, 610) has connectors (224, 324) arranged to correspond to connection points (226, 326) on an aircraft (201, 301, 401, 801). The transmitters (211) are connected to the base structure (210, 310, 610). The transmitters (211) are configured to transmit using a first plurality of the satellite frequency bands (202). The receivers (212) are connected to the base structure (210, 310, 610). The receivers (212) are configured to receive using a second plurality of the satellite frequency bands (202). A selected transmitter (214) in the transmitters (211) transmits using a satellite frequency band in the satellite frequency bands (202) is positioned at a distance from a selected receiver (217) in the receivers (212) using the satellite frequency band in the satellite frequency bands (202) on the base structure (210, 310, 610) with a number of other transmitters (211) and receivers (212) located between the selected transmitter (214) and the selected receiver (217) on the base structure (210, 310, 610).

## Description

### BACKGROUND INFORMATION

### 1. Field:

The present disclosure relates generally to aircraft and in particular, to a satellite communications system for an aircraft.

### 2. Background:

Satellite systems are used in aircraft to provide communications. The satellite data communications systems used in aircraft operate at different frequencies. For example, a Ku-band satellite system can operate at radio frequencies from 12 GHz to 18 GHz. A Ka-band satellite system can operate at radio frequencies from 26.5 GHz -40 GHz.

These types of satellite antenna systems can be used for various types of communication for the aircraft. For example, a satellite system can be used to provide in-flight connectivity. This connectivity can be used for exchanging information used to operate the aircraft. Further, this connectivity can also be used for in-flight entertainment, voice calls, internet connections, or data communications for passengers on the passenger aircraft.

The reception and transmission of electromagnetic signals by phased array satellite antenna(s) is referred to as a beam. Through the use of phase-shifters or time-delays to individual phased array antenna elements, phased array antennas can be made to point these beams in a particular direction for either transmitting or receiving signals. Beams can define the coverage on the earth's surface where a satellite can provide communications services. Beams are also used to point to satellites from ground stations, mobile vehicles, or airplanes for transmitting and receiving.

Current satellite phased array antenna systems for aircraft are located under radio frequency transparent radomes that house antennas with single beam Ku-band and Ka-band connectivity to satellites. With growing numbers of satellites being deployed in different orbits, at different velocities, at different distances from the earth, and at different frequency bands and polarizations, these current types of systems are inefficient for multiple transmit and receive beams to multiple satellites. Therefore, it would be desirable to have a method and apparatus that take into account at least some of the issues discussed above, as well as other possible issues. For example, it would be desirable to have a method and apparatus that overcomes limited connectivity and improves efficiency and cost when communicating with one or more satellite systems.

### SUMMARY

An example of the present disclosure provides an aircraft satellite communications system that communicates using satellite frequency bands. The aircraft satellite communications system comprises a base structure, transmitters, and receivers. The base structure has connectors arranged to correspond to connection points on an aircraft. The transmitters are connected to the base structure. The transmitters are configured to transmit using a first plurality of the satellite frequency bands. The receivers are connected to the base structure. The receivers are configured to receive using a second plurality of the satellite frequency bands. A selected transmitter in the transmitters transmits using a satellite frequency band in the satellite frequency bands is positioned at a distance from a selected receiver in the receivers using the satellite frequency band in the satellite frequency bands on the base structure with a number of other transmitters and receivers located between the selected transmitter and the selected receiver on the base structure.

Optionally, the system further comprises a radome covering the transmitters and the receivers connected to the base structure.

Optionally, the distance is a maximum physical distance possible between the selected transmitter and the selected receiver.

Optionally, the transmitters and the receivers are positioned such that interference between the transmitters and the receivers is reduced.

Optionally, the selected transmitter is a Ku-band transmitter and the selected receiver is a Ku-band receiver and wherein the Ku-band transmitter and the Ku-band receiver are located on opposite ends of the base structure. Preferably, the transmitters further comprise a Ka-band transmitter that transmits using a Ka band, wherein the receivers further comprise a K-band receiver that receives using the K band, and wherein the Ku-band transmitter and the Ku-band receiver are located on opposite ends of the base structure and wherein the Ka-band transmitter and the K-band receiver are located between the Ku-band transmitter and Ku-band receiver.

Optionally, the selected transmitter is a Ka-band transmitter and the selected receiver is a K-band receiver and wherein the Ka-band transmitter and the K-band receiver are located on opposite ends of the base structure.

Optionally, the system further comprises a controller configured to subdivide transmit elements in a transmitter in the transmitters into multiple apertures, and transmit information from the transmitter in a number of beams using a number of the multiple apertures. Preferably, the controller is configured to select an aperture size for an aperture that enables using amplifiers for the transmit elements in the aperture at a power level that saturates the amplifiers for the transmit elements in the aperture in emitting a beam in the number of beams at a satellite with a desired level of power for a satellite type for the satellite.

Optionally, the system further comprises a controller configured to subdivide receive elements in a receiver in the receivers into multiple apertures, and receive information from a number of beams using a number of the multiple apertures.

Optionally, a receiver in the receivers simultaneously receives multiple beams.

Optionally, the transmitters and receivers are formed from phased array antennas.

Optionally, the satellite frequency bands used by the aircraft satellite communications system form a wideband.

Optionally, the base structure, the transmitters, the receivers, and the radome meet an ARINC 792 standard.

Optionally, the aircraft is selected from a group comprising a commercial airplane, a cargo airplane, a tilt-rotor aircraft, a tilt wing aircraft, a military air vehicle, a vertical takeoff and landing aircraft, an unmanned aerial vehicle, a drone, an electric vertical takeoff and landing vehicle, and a personal air vehicle.

Another example of the present disclosure provides an aircraft satellite communications system comprising a base structure having connectors arranged to correspond to connection points on an aircraft. A Ku-band transmitter is connected to the base structure. The Ku-band transmitter transmits using a Ku-band satellite band. A Ka-band transmitter is connected to the base structure. The Ka-band transmitter transmits using a Ka-band satellite band. A Ku-band receiver is connected to the base structure. The Ku-band receiver receives using the Ku-band satellite band. A K-band receiver is connected to the base structure. The K-band receiver receives using a K-band satellite band.

Optionally, the base structure having connectors arranged to correspond to connection points on an aircraft is such that recertification is unnecessary.

Optionally, the base structure, the Ku-band transmitter, the Ka-band transmitter, the Ku-band receiver, and the K-band receiver meet ARINC 792 standard.

Optionally, the base structure is connected to the Ku-band transmitter, the Ka-band transmitter, the Ku-band receiver, and the K-band receiver, and wherein the Ku-band transmitter, the Ka-band transmitter, the Ku-band receiver, and the K-band receiver fit within an existing radome of the aircraft when the connectors for the base structure are connected to the connection points on the aircraft.

Optionally, the system further comprises a thermal management system.

Optionally, the system further comprises a controller in communication with the Ku-band transmitter, the Ka-band transmitter, the Ku-band receiver, and the K-band receiver, wherein the controller is configured to control the Ku-band transmitter and the Ka-band transmitter to emit first radio frequency beams, and control the Ku-band receiver and the K-band receiver to receive second radio frequency beams.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is a pictorial illustration of an aircraft in communication with satellites in accordance with an illustrative example;
**Figure 2** is an illustration of a block diagram of a communications environment in accordance with an illustrative example;
**Figure 3** is an illustration of a phased array antenna system on an aircraft in accordance with an illustrative example;
**Figure 4** is an illustration of a phased array antenna system on an aircraft depicted in accordance with an illustrative example;
**Figure 5** is an illustration of a schematic diagram for satellite communications with an aircraft satellite communications system using satellites from two services depicted in accordance with an illustrative example;
**Figure 6** is an illustration of a top view of an aircraft satellite communications system depicted in accordance with an illustrative example;
**Figure 7** is an illustration of an aircraft manufacturing and service method in accordance with an illustrative example; and
**Figure 8** is an illustration of a block diagram of an aircraft in which an illustrative example may be implemented.

### DETAILED DESCRIPTION

The illustrative examples recognize and take into account one or more different considerations. For example, the illustrative examples recognize and take into account that existing configurations of satellite phased array antennas are directed towards providing single band communications. For example, a satellite phased array antenna system for an aircraft can comprise a Ka-band transmitter and a Ka-band receiver. Another satellite phased array antenna system can comprise a Ku-band transmitter and a Ku-band receiver. These satellite antenna systems are in packages that are certified for connection to particular aircraft. In other words, these antenna systems are in flight certified packages for particular aircraft.

The illustrative examples recognize and take into account that current satellite antenna systems do not provide multiband capabilities. For example, a current satellite antenna system may only provide an ability to use the Ku-band or the Ka-band but not in the same satellite antenna system that has been certified for use on aircraft.

Different communications providers of satellite communications can compete for business from airlines. These different communications providers may provide competitive quotes. However, the ability of an airline to use a particular provider can depend on the satellite band used by that provider.

Different communications providers of satellite communications can use different satellite transmission frequencies. For example, a first provider may use the Ku-band while a second provider may use the Ka-band to provide Internet service. As a result, if the aircraft for an airline uses a satellite antenna system operating on the Ka-band and the provider offering the best proposal provides service using the Ku-band, then the airline is unable to take advantage of this proposal without changing the satellite antenna systems on their aircraft. This type of change can be costly and time-consuming. As a result, an airline can be limited in the service providers that they can use.

A way of addressing this problem is the use of a single multi-band (Ku- to Ka-band), multi-function (Tx and Rx) wide-beam scanning phased-array aperture. In the design of such an aperture, the radiator elements must operate over the entire bandwidth and fit within the tight-element spacing set by the upper frequency limit (31 GHz). The combined Tx (Ku- and Ka-band) and Rx (Ku- and K-band) functions require the use of wideband, high-power, low-loss circulators or switches that must fit within the available element area along with phase-shifters, low-noise amplifiers, high-power amplifiers, controllers, filters, and matching circuitry at each unit-cell. Each unit-cell is replicated over the entire aperture. If circulators and filters are not physically realizable at each unit cell to achieve the required Tx to Rx isolation for simultaneous full-duplex operation, then a switch relegates this solution to half-duplex operation and significantly reduces the available system data through-put. This approach also strains the bandwidth of each element within very tight-array lattices.

Another approach provides two antennas, one for transmit and one for receive, as multi-band, single-function wide-beam scanning phased array apertures. The transmit aperture operates at (Ku- and Ka-band) while the receive aperture operates at (Ku- and K-band). No circulators or switches are required and full-duplex operation may be achieved using spatial separation and/or ground plane corrugations to increase transmit to receive isolation. The Tx aperture radiator elements must operate over the entire (Ku- to Ka-band) bandwidth and fit within the tight element spacing set by the upper frequency limit. (31 GHz) The Tx unit cell includes high-power amplifiers, phase-shifters, controllers and matching circuits at each unit-cell which are replicated over the entire aperture. Similarly, the Rx aperture radiator elements must operate over the entire (Ku- to K-band) bandwidth and fit within the tight element spacing set by the upper frequency limit (21.2 GHz) The Rx unit cell includes low-noise amplifiers, phase-shifters, controllers and matching circuits at each unit-cell which are replicated over the entire aperture. In this approach, elements operate over large bandwidths within tight-array lattices which often increases complexity and degrades performance.

Here, the illustrative examples provide an antenna system that provides multi-satellite band capabilities without degraded performance or reduced radiator efficiency. Further, these capabilities are provided and sized to fit within the dimensions of the ARINC-792 industry standard. This example uses 4 single-band, single-function wide-beam scanning phased array apertures. For the Ka-band Tx, the radiator elements operate at (27 to 31 GHz) with element spacing set at (31 GHz). The Ku-band Tx radiator elements operate from (14 to 14.5 GHz) with the element spacing set at (14.5 GHz). The Ku-Tx unit cell also provides arbitrary-linear polarization operation to accommodate the existing satellite constellation. The Ka-Tx aperture provides switchable Right-hand circular and left-hand circular operation. Each Tx aperture includes high-power amplifiers and phase-shifters optimized at their appropriate band over the entire scanning volume.

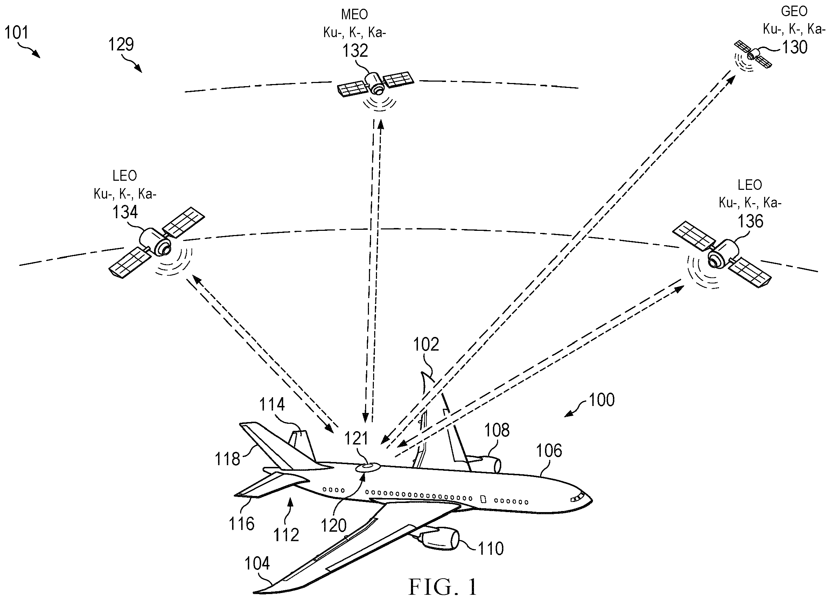

With reference now to the figures, and in particular, with reference to **Figure 1****,** a pictorial illustration of an aircraft in communication with satellites is depicted in accordance with an illustrative example. In this illustrative example, aircraft **100** in communications environment **101** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft in which aircraft satellite communications system **120** can be implemented in accordance with an illustrative example. As depicted, aircraft satellite communications system **120** includes phased array antennas **121** on body **106** of aircraft **100.**

Aircraft satellite communications system **120** can be used to communicate with satellites **129.** In this example, satellites **129** includes geosynchronous orbit (GEO) satellite **130,** medium earth orbit (MEO) satellite **132,** low earth orbit (LEO) satellite **134,** and LEO satellite **136.** In this example, different satellites can be in different orbits at different altitudes.

For example, GEO satellite **130** travels in a geostationary orbit. The altitude of this satellite is about 35,786 kilometers above the Earth's equator. In this example, GEO satellite **130** travels at the same rate as the Earth's rotation and orbits the earth in about 24 hours. With this orbit, GEO satellite **130** appears to be stationary relative to a fixed point on the ground. A delay of 270 mS is present for communications exchanged with GEO satellite **130.** For example, GEO satellite **130** can be used for television broadcasts and Internet communications, as well as other types of communications. Depending upon the service provider, GEO satellite **130** may transmit or receive at Ku, K, or Ka frequency bands.

As depicted, MEO satellite **132** travels in a medium earth orbit (MEO). Altitudes of MEO satellite **132** can range from 2000 km to just below 35,780 kilometers. Since MEO satellite **132** is closer to earth, it travels at a speed faster than GEO satellite **130.** This type of satellite can orbit the earth in about 127 minutes when the orbit is at an altitude of about 2000 km. At this altitude, the delay of 15 ms is present for communications. Depending upon the service provider, MEO satellite **132** may transmit or receive at Ku, K, or Ka frequency bands.

In this example, LEO satellite **134** and LEO satellite **136** travel in a low Earth orbit (LEO). The satellites travel at an altitude that is typically below 2000 km. For example, these two satellites can travel at an altitude of 160 km. The satellites can orbit the earth in about 88 minutes when the satellite is at an altitude of 160 km. At this altitude, a delay of 1.2 milliseconds is present. Depending upon the service provider, LEO satellite **134** and LEO satellite **136** may transmit or receive at Ku, K, or Ka frequency bands.

These satellites are at different distances from the earth and from aircraft satellite communications system **120.** As result, different signal levels are needed to communicate with different satellites. For example, GEO satellite **130** orbits at 35,786 km. Because of this distance, the GEO satellite requires the most sensitive receivers on aircraft satellite communications system **120,** and the most power for the transmitters compared to communications with the other satellites.

In this example, MEO satellite **132** orbits at 2000 km. MEO satellite **132** is 17 times closer than GEO satellite **130** and requires less sensitivity for the aircraft satellite communications system **120** receivers and less power for transmitters. Further, LEO satellite **134** and LEO satellite **136** are at 160 km and are 12.5 times closer than MEO satellite **132.** As a result, these satellites require reduced sensitivity for aircraft satellite communications system receivers in aircraft satellite communications system **120** and less power for the aircraft satellite communications system transmitters in aircraft satellite communications system **120** .

In addition, these satellites also operate at different transmit and receive frequencies. In one example, transmit (Tx) uplink to GEO satellite **130** uses Ka-band. The receive (Rx) downlink from GEO satellite **130** uses Ku-band. Further in this example, the transmit (Tx) uplink to MEO satellite **132** is a Ku-band, the receive (Rx) downlink from MEO satellite **132** is K-band. The LEO satellites use a transmit (Tx) uplink that is a K-band or Ka-band. In this example, the receive (Rx) downlink for LEO satellites is a Ku-band.

A number of parameters are used to measure and determine communications with satellites. These parameters include effective isotropic radiated power (EIRP) and antenna gain/noise temperature (G/T) ratio. In this example, EIRP represents the strength of the transmitted signal from an antenna. This parameter indicates how much power an isotropic (uniformly radiating) antenna needs to emit to produce the same peak power density as the actual antenna in its direction of maximum gain. This parameter effectively quantifies the signal strength as it leaves the transmitting phased array antenna.

In this example, G/T is a measure of a satellite system's receiving capability. In this ratio, "G" is the antenna gain. This antenna gain indicates the effectiveness of the antenna in capturing incoming signals. Further in this example, "T" is the system's noise temperature. T is a measure of its internal and external noise. As the G/T ratio increases, the receiver can better discern weak signals amidst the background noise.

In these examples, assuming similar satellite antennas, more EIRP and G/T is needed to connect to GEO satellite **130** as compared to MEO satellite **132,** LEO satellite **134,** or LEO satellite **136.** In these illustrative examples, an ability to subdivide an aperture for receiver or transmitter into multiple apertures in aircraft satellite communications system **120** enables having increased numbers of connections from the aircraft to the satellites.

In this illustrative example, aircraft satellite communications system **120** has multiband capabilities. For example, aircraft satellite communications system **120** can support communications using K-, Ka- and Ku-bands. This phased array antenna system is in contrast to current antenna systems which only support a single satellite band. In the illustrative examples, the phased array antenna system can support multiple satellite bands without needing recertification for use with an aircraft. In this illustrative example, the package for the phased array antenna system can fit under the currently used radome and can be connected to the aircraft using the same connection points on the aircraft.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of items" is one or more items.

Thus, aircraft **100** with aircraft satellite communications system **120** can use multiple satellite bands for communications. As a result, increased flexibility in selecting communications providers occurs using this phased array satellite system.

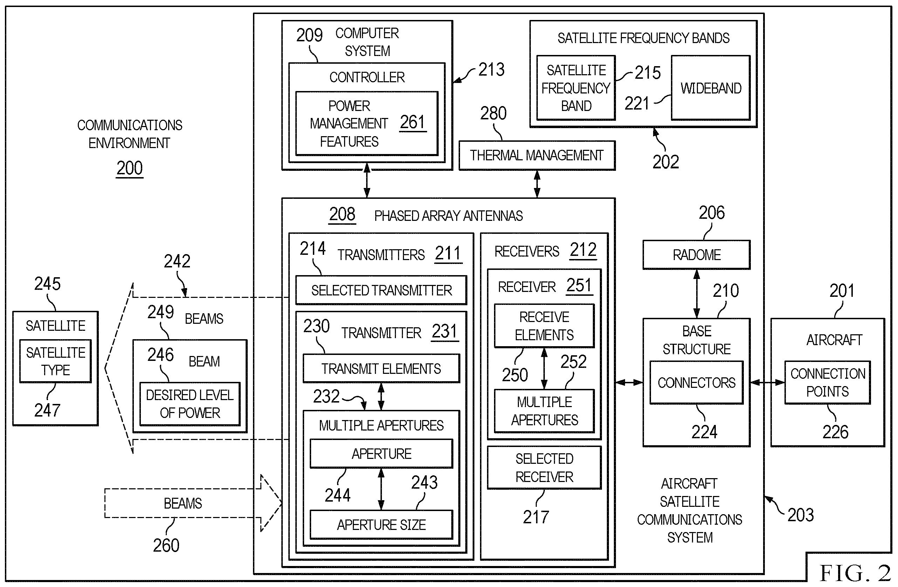

With reference now to **Figure 2****,** an illustration of a communications environment is depicted in accordance with an illustrative example. In this illustrative example, communications environment **200** is an environment in which satellite communications can be provided to aircraft **201.** In this example, communications environment **101** in **Figure 1** is an example of an implementation for communications environment **200** in Figure 2. Aircraft satellite communication system **203** communicates from aircraft **201** to satellites **245** using satellite frequency bands **202.** In this example, satellite frequency bands **202** form wideband **221.**

Aircraft **201** can take a number different forms. For example, aircraft **201** can be selected from a group comprising a commercial airplane, a cargo airplane. a tilt-rotor aircraft, a tilt wing aircraft, a military vehicle, a vertical takeoff and landing aircraft, an unmanned aerial vehicle, a drone, an electric vertical takeoff and landing vehicle, a personal air vehicle, and other types of aircraft, land vehicles, or water-based vessels.

In this example, aircraft satellite communications system **203** comprises a number of different components. As depicted, aircraft satellite communications system **203** comprises base structure **210,** phased array antennas **208,** controller **209,** and radome **206**

Base structure **210** is a physical component that serves as a platform or structure on which phased array antennas **208** can be connected. Base structure **210** has connectors **224** arranged to correspond to connection points **226** on aircraft **201.**

When one component is "connected" to another component, the connection is a physical connection. For example, a first component, a phased array antenna, can be considered to be physically connected to a second component, base structure **210,** by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both. In some examples, the first component can be physically connected to the second component by being located within the second component.

In this illustrative example, phased array antennas **208** comprise transmitters **211** and receivers **212.** In this illustrative example, transmitters **211** and receivers **212** include phase array apertures that are comprised of elements that operate to transmit or receive beams. These elements can also be referred to as antenna elements.

In this example, transmitters **211** are connected to the base structure **210.** Transmitters **211** transmit using a first plurality of satellite frequency bands **202.** Receivers **212** also are connected to base structure **210.** In this example, receivers **212** receive using a second plurality of satellite frequency bands **202.**

A transmitter in transmitters **211** is a hardware component that comprises elements and electronics that are used to transmit beams **242.** These elements include antenna elements that are used to transmit a beam. A receiver in receivers **212** is a hardware component that comprises elements and electronics that are used to receive a beam. These elements also include antenna elements and are used to receive a beam. The electronics in these examples can include amplifiers, filters, phase shifters, time delays, distribution networks, and other components used to operate the elements.

In these illustrative examples, a satellite frequency band **215** is a specific range of radio frequencies used for satellite communication. Examples of satellite frequency bands **202** include L-, S-, C-, X-, Ku-, K-, Ka-, Q- , V-bands. A satellite using a satellite frequency band can transmit or receive using a frequency within that satellite frequency band.

As depicted, radome **206** is a structural enclosure that protects components. In this example, radome **206** covers transmitters **211** and receivers **212** connected to base structure **210.** Radome **206** physically shields transmitters **211** and receivers **212** from the environment around aircraft **201** without interfering with the operation of these antennas. Radome **206** can function to protect these antennas from airflow around the aircraft, adverse weather conditions, temperature extremes, impacts, or other undesired contact while enabling communication signals to pass through the radome **206** in both directions.

In this illustrative example, selected transmitter **214** in transmitters **211** transmits using satellite frequency band **215** in the satellite frequency bands **202** and is positioned at a distance from selected receiver **217** in the receivers **212** using satellite frequency band **215** in satellite frequency bands **202** on base structure **210** with a number of other transmitters and receivers located between selected transmitter **214** and selected receiver **217** on base structure **210.** These transmitters and receivers comprise phased array antennas having antenna elements, phase shifters or time delays, distribution networks, and electronics.

In one illustrative example, the distance is a maximum physical distance possible between selected transmitter **214** and selected receiver **217.** In other words, to improve radio frequency isolation and reduce interference, the greatest distance possible between these two components is used with respect to the placement of other transmitters and receivers on base structure **210.**

In one illustrative example, selected transmitter **214** is a Ku-band transmitter and selected receiver **217** is a Ku-band receiver. In this example, the receive frequency is a part of a Ku-band from 10.7 GHz to 12.7 GHz and the transmit frequency is a part of the Ku-band from 14 GHz to 14.5 GHz.

With this example, the positioning of these two components is such that the Ku-band transmitter and the Ku-band receiver are located on opposite ends of the base structure **210.** This positioning provides the distance in the form of a maximum physical distance in this example.

In another illustrative example, selected transmitter **214** is a Ka-band transmitter and selected receiver **217** is a K-band receiver. In this example, the transmit frequency is a part of a Ka-band from 27.5 to 31 GHz. The receive frequency is a part of a K-band from 17.7 GHz to 21.2 GHz. In this example, the Ka-band transmitter and the K-band receiver are located on opposite ends of base structure **210.**

In other illustrative examples, the distance does not necessarily need to be a maximum physical distance. Instead, this distance can be selected as a value that reduces or avoids interference between selected transmitter **214** and selected receiver **217** when components are operating at the same time.

In this illustrative example, transmitters **211** and receivers **212** are positioned such that interference between transmitters **211** and receivers **212** is reduced. Selection of positions can depend on satellite frequency bands **202** used by the different components and based on when components may operate at the same time. For example, if a transmitter and a receiver both operate using the same satellite frequency band and can operate at the same time, position can be selected to reduce interference between the transmitter and receiver.

In these examples, transmitters **211** can further comprise a transmitter that transmits using a Ka-band. In this example, receivers **212** can further comprise a receiver that receives using the K-band. With this example, the Ku-band transmitter and the Ku-band receiver are located on opposite ends of the base structure and wherein the Ka-band transmitter and the K-band receiver are located between the Ku-band transmitter and the Ku-band receiver.

The positioning of receivers and transmitters can also be selected to provide the greatest separation between a transmitter and a receiver using the same satellite bands. This positioning of receivers and transmitters can also be selected to provide the greatest separation between a transmitter and a receiver using different satellite bands. By increasing the physical separation between different components that operate using frequencies that are closer than the frequencies used by other components, interference can be reduced in aircraft satellite communications system **203.**

In one illustrative example, two transmitters and two receivers are used in aircraft satellite communications system **203.** In this example, the base structure **210** with the two transmitters and the two receivers is a standard, such as ARINC 792. In other words, these components are designed and placed such that the standards requirements of ARINC 792 are met. ARINC 792 is a standard that sets out the desired characteristics of a second-generation aviation Ku-band and Ka-band satellite communication (satcom) system intended for installation in all types of aircraft.

In this illustrative example, controller **209** controls the operation of phased array antennas **208.** In these illustrative examples, controller **209** can be implemented in software, hardware, firmware or a combination thereof. When software is used, the operations performed by controller **209** can be implemented in program instructions configured to run on hardware, such as a processor unit. When firmware is used, the operations performed by controller **209** can be implemented in program instructions and data and stored in persistent memory to run on a processor unit. When hardware is employed, the hardware can include circuits that operate to perform the operations in controller **209.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

In this example, controller **209** can be located in computer system **213,** which is a physical hardware system and includes one or more data processing systems. When more than one data processing system is present in computer system **213,** those data processing systems are in communication with each other using a communications medium. The communications medium can be a network. The data processing systems can be selected from at least one of a computer, a server computer, a tablet computer, or some other suitable data processing system.

As depicted, computer system **213** includes a number of processor units that are capable of executing program instructions implementing processes in the illustrative examples. In other words, program instructions are computer-readable program instructions.

Controller **209** can control transmitters **211** to transmit information and control receivers **212** to receive information. Further in this example, the control of phased array antennas **208** performed by controller **209** can include controlling when and how phased array antennas **208** receive and transmit satellite signals. Further, controller **209** can operate to reduce interference from the operation of transmitters in phased array antennas **208.** For example, controller **209** can include hardware to reduce cosine interference and other interference that can occur from multiple transmitters operating at the same time. In other illustrative examples, controller **209** can reduce this interference by controlling the operation of phased array antennas **208** such that a single transmitter transmits at any particular time.

In some illustrative examples, interference can also be reduced through the use of structural components. For example, corrugation grooves that are configured to provide a desired amount of attenuation between a receiver and transmitter can be implemented. These grooves can be implemented in a structure located between the receiver and the transmitter such that attenuation of the radio frequencies occurs at the receiver while the transmitter is transmitting the radio frequencies. Interference can also be reduced using meta materials or other absorptive materials. These meta materials are resonant at the frequency of interest to suppress the flow currents at that frequency that can cause interference. This use of at least one of the grooves, meta materials, or other absorptive or suppressive materials attenuates the signals from the transmitter that flow to the receiver and increases transmitter to receiver isolation. As result, interference is reduced using these and other techniques.

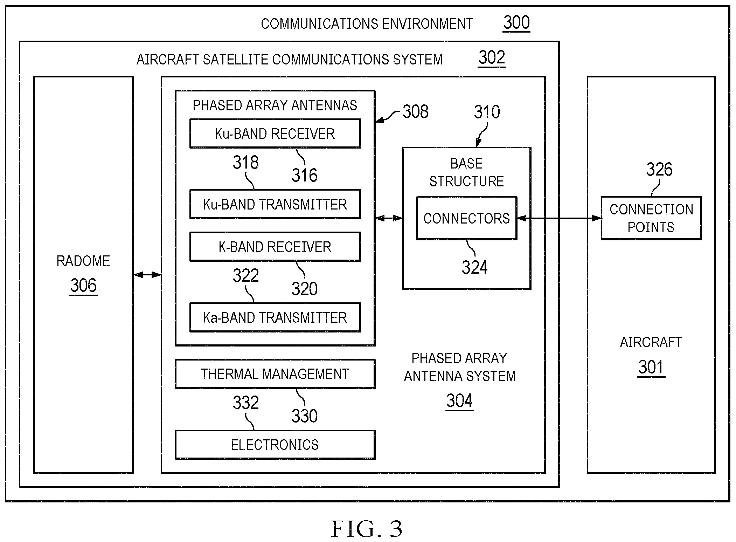

Controller **209** can also include power management features **261.** For example, controller **209** can selectively power different antennas and phased array antennas **308** in **Figure 3** based on power usage of those phased array antennas.

Returning to **Figure 2****,** in one illustrative example, controller **209** can subdivide transmit elements **230** in transmitter **231** in transmitters **211** into multiple apertures **232.** Transmit elements **230** can be grouped into regions such that multiple apertures **232** are present. These groups of transmit elements **230** can be controlled independently to transmit signals in the form of beams. In this example, transmit elements **230** are antenna elements used to transmit signals such as those that form a beam.

Controller **209** can then transmit information from transmitter **231** in a number of beams **242** using a number of multiple apertures **232.**

In this illustrative example, an aperture represents a region of antenna elements that work together to transmit or receive electromagnetic waves. These individual antenna elements can have their phase adjusted electronically, allowing the entire array to steer the direction of the main beam without physically moving the antenna. The manipulation of phase or time among the antenna elements allows the phased array to control the way its aperture interacts with electromagnetic waves, thereby determining the direction and shape of the transmitted or received signals or beams. An aperture can be subdivided into multiple apertures **232** such that the different antenna elements in the different apertures work together to form different beams.

Further in this example, controller **209** selects aperture size **243** for aperture **244** that enables using the amplifiers for transmit elements **230** in aperture **244** at a power level that controls the amplifiers for transmit elements **230** in aperture **244** to emit beam **249** in the number of beams **242** toward satellite **245** with the desired level of power **246** for satellite type **247** of satellite **245.**

In this example, satellite type **247** can be, for example, a GEO satellite, a MEO satellite, or a LEO satellite. These different types of satellites orbit at different distances from the earth and thus require different transmit powers. For example, a GEO satellite may require maximum transmitter amplifier saturation to effectively and efficiently reach the GEO satellite. However, for transmitting to a LEO satellite, using too much power can result in beam **249** in the number of beams **242** to transmit with power that may over-saturate the input stage of the receiving satellite **245.** Thus, controller **209** must control the desired level of power **246** for maximum efficiency in effectively transmitting to each satellite type **247** of satellite **245.**

In this example, rather than reducing the power to all of the amplifiers in a transmitter to a LEO satellite, the transmitter can be divided into multiple apertures **232.** Aperture **244** in multiple apertures **232** can transmit the information in a beam **249** in beams **242** in which the subset of amplifiers are used to transmit to a LEO satellite at full power and operating in a saturation mode for maximum efficiency. This provides for the greater efficiency in energy use in transmitting information to different types of satellites at different distances from the aircraft.

In another illustrative example, controller **209** can subdivide receive elements **250** in receiver **251** of receivers **212** into multiple apertures **252.** Receive elements **250** are antenna elements that operate to receive signals. In this example, controller **209** can receive information from a number of beams **260** using a number of multiple apertures **252.**

In these examples, more EIRP and G/T is needed to connect to a GEO satellite as compared to a MEO satellite or a LEO satellite. With less EIRP and G/T, subdividing an aperture into multiple apertures for a receiver or a transmitter in phased array antennas **208** enables having an increased number of beams resulting in connections from the aircraft to the satellites. In these examples, each additional aperture enables using an additional beam to receiver transmit information.

Further, aircraft satellite communications system **203** can also include thermal management **280.** Thermal management **280** includes features or components that are selected to reduce thermal issues that can occur from using multiple ones of transmitters **211** and receivers **212** in phased array antennas **208.** Thermal management **280** can include at least one of transmitter placement on base structure **210,** receiver placement on base structure **210,** a thermal conductor structure, a heat transfer fin, an air flow structure, a fan, a heat transfer unit, an insulator, or other suitable features that can draw off heat generated by transmitters **211.** These thermal management features can be selected to perform heat transfer or increasing convection such that heat generation by transmitters **211** do not affect the performance or operation of the transmitters.

For example, the phased array antennas for transmitters and receivers can include metallic cold-plates to remove heat from electronics and spread the heat away from these components. Further, thermal management **280** can also include mechanisms such as passive and active heat spreaders. These heat spreaders can include heat-pipes, liquid cooling, fins, and other suitable components.

With reference to **Figure 3****,** an illustration of a communications environment is depicted in accordance with an illustrative example. In this illustrative example, communications environment **300** is an environment in which satellite communications can be provided to aircraft **301** using aircraft satellite communications system **302.** In this example, communications environment **101** in **Figure 1** is an example of an implementation for communications environment **300.** Aircraft satellite communications system **302** communicates with aircraft **301** using connectors **324** and connection points **326.** In this illustrative example, aircraft satellite communications system **302** includes phased array antenna system **304** and radome **306.**

In this illustrative example, phased array antenna system **304** comprises phased array antennas **308** and base structure **310.** In this example, phased array antennas **308** can be used instead of mechanical satellite antennas that rotate or move. These phased array antennas can take up less space as compared to mechanical satellite antennas. In this illustrative example, phased array antennas **308** comprises Ku-band receiver **316,** Ku-band transmitter **318,** K-band receiver **320** and Ka-band transmitter **322.**

As depicted, phased array antennas **308** are connected to base structure **310.** Base structure **310** is a structure that supports the different components in aircraft satellite communications system **302.** In this illustrative example, base structure **310** has connectors **324** that connect to connection points **326** on aircraft **301.** In this illustrative example, connectors **324** are configured such that changes to connection points **326** are not needed. In other words, base structure **310** can be connected to aircraft **301** using existing connection points.

In this illustrative example, aircraft satellite communications system **302** fits inside of radome **306,** which is an enclosure that protects phased array antenna system **304** and is constructed of a material that is transparent to radio frequency signals transmitted and received by phased array antenna system **304.** As depicted, the selection of phased array antennas **308** is made such that the phased array antennas **308** and base structure **310** can fit under radome **306** without needing changes to radome **306.**

In this illustrative example, aircraft satellite communications system **302** meets ARINC 792 standards. For example, base structure **310,** Ku-band receiver **316,** Ku-band transmitter **318,** K-band receiver **320** and Ka-band transmitter **322** meet ARINC 792 standards. Additionally, connectors **324** have dimensions and arrangements corresponding to connection points **326** that meet ARINC 792 standards. In other examples, aircraft satellite communications system **302** can be designed and constructed to meet other standards or specifications.

In this illustrative example, phased array antenna system **304** also includes thermal management **330.** Thermal management **330** includes features or components that are selected to reduce thermal issues that can occur from using multiple transmitters and receivers in phased array antenna system **304.** Thermal management **330** can include at least one of transmitter placement on base structure **310,** receiver placement on base structure **310,** a thermal conductor structure, one or more heat transfer fins, an air flow structure, a fan, a heat transfer unit, an insulator, or other suitable features that can draw off heat generated by transmitters.

These thermal management features can be selected to perform heat transfer or convection such that heat generation by transmitters do not affect the performance or operation of the transmitters.

Additionally, phased array antenna system **304** can also include electronics **332.** Electronics **332** control the operation of phased array antennas **308.** Electronics **332** comprises hardware circuits and may include computers. Further, electronics **332** can include software that is used by the hardware.

The control of phased array antennas **308** can include controlling when and how phased array antennas **308** receive and transmit satellite signals. Further, electronics **332** reduce interference from the operation of transmitters in phased array antenna system **304.** For example, electronics **332** can include hardware to reduce cosine interference and other interference that can occur from multiple transmitters operating at the same time. In other illustrative examples, electronics **332** can reduce this interference by controlling the operation of phased array antennas **308** such that beam directionality is controlled or a single transmitter transmits at any particular time.

Electronics **332** can also include power management features. For example, electronics **332** can selectively power different antennas and phased array antennas **308** at different power levels based on power usage of those phased array antennas.

In the illustrative examples, phased array antenna system **304** can use multiple receivers and transmitters for multiple satellite bands in a package that has the same form factor as currently used satellite antenna systems for aircraft. Further, increased flexibility in communications can be obtained by having multiple types of transmitters. For example, a transmitter can be used based on the transmitter having the best quality for transmitting information. As another example, increased bandwidth can be obtained through using multiple transmitters and receivers at the same time. In yet another illustrative example, one transmitter and receiver can operate as a backup to the other transmitter and receiver.

In the illustrative examples, phased array antenna system **304** can use multiple receivers and transmitters for multiple satellite bands in a package that has the same form factor as currently used satellite antenna systems for aircraft. In yet another illustrative example, another set of Ku-band satellite antennas is used in addition to or in place of K-band receiver **320** or Ka-band transmitter **322.** In yet another illustrative example, an additional set of satellite antennas can be used in addition to Ku-band receiver **316** and Ku-band transmitter **318,** and Ka-band transmitter **322** and K-band receiver **320** depending on the space available.

With the ability to use multiple satellite bands, increased options are available to airlines using aircraft with this phased array antenna system. For example, an airline does not need to change the phased array antenna system on an aircraft based on whether the potential provider uses the Ku-band or Ka-band when the phased array antenna system includes transmitters and receivers for both bands. As a result, having a particular type of hardware is not a limiting factor in the different illustrative examples. Further, the ability to have multiple transmitters and receivers of the same type can increase the available bandwidth and provide communications redundancy.

Thus, one or more illustrative examples can provide improved connectivity for aircraft as compared to currently used satellite systems. In one or more illustrative examples, the aircraft satellite communications system has a design and configuration that enables receiving beams and transmitting beams with satellites that communicate with multiple service providers using different satellite bands. In the illustrative examples, the aircraft satellite communications system can simultaneously provide connectivity with multiple service providers using different satellite bands.

Further, the illustrative examples can be implemented in a manner that follows current standards for satellite communications for aircraft such as the ARINC 792 standard. This implementation can provide increased connectivity while meeting current standards for satellite communications for aircraft.

Thus, the illustrative examples provide an improved aircraft satellite communications system that communicates using satellite frequency bands. The satellite frequency bands can cover the desired bands needed to provide service to aircraft from multiple service providers. The aircraft satellite communications system comprises a base structure, transmitters, and receivers. The base structure has connectors arranged to correspond to connection points on an aircraft. The transmitters are connected to the base structure. The transmitters are configured to transmit using a first plurality of the satellite frequency bands. The receivers are connected to the base structure. The receivers are configured to receive using a second plurality of the satellite frequency bands. In one illustrative example, for improved signal isolation, a selected transmitter in the transmitters transmits using a satellite frequency band in the satellite frequency bands is positioned at a distance from a selected receiver in the receivers using the satellite frequency band in the satellite frequency bands on the base structure with a number of other transmitters and receivers located between the selected transmitter and the selected receiver on the base structure. In this illustrative example, these transmitters and receivers comprise phased array antennas having antenna elements, phase shifters or time delays, distribution networks, and electronics.

The illustration of communications environment **200** in **Figure 2** and communications environment **300** in **Figure 3** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, aircraft satellite communications system **302** can also include a power supply connected to base structure **310.** In other examples, the power supply can be provided by aircraft **301** with connection points to phased array antenna system **304.** In still another illustrative example, electronics **332** can be located in aircraft **301** instead of being connected to base structure **310.** In yet other illustrative examples, electronics **332** can be distributed between phased array antenna system **304** and aircraft **301.** For example, modems, control boards, and other hardware for different vendors for services can be located on aircraft **301** reducing the need to access phased array antennas **308** under radome **306.**

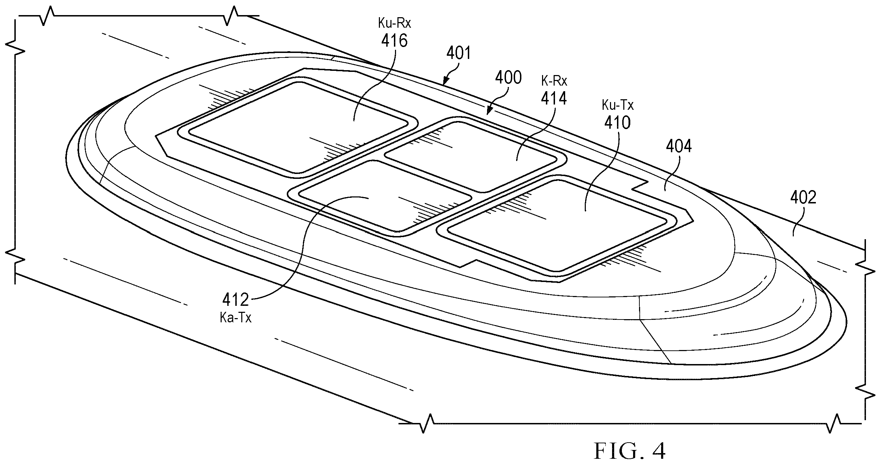

With reference to **Figure 4****,** an illustration of a phased array antenna system on an aircraft is depicted in accordance with an illustrative example. As depicted, aircraft satellite communications system **401** is located on aircraft **402.** Aircraft satellite communications system **401** is an example of an implementation for aircraft satellite communications system **203** in **Figure 2** and aircraft satellite communications system **302** in **Figure 3****.**

In this illustrative example, aircraft satellite communications system **401** takes the form of phased array antenna system **400** and is located within radome **404.** In this illustrative example, an exposed view of radome **404** is depicted to illustrate the location of Ku-band transmitter (Tx) **410,** Ka-band transmitter (Tx) **412,** K-band receiver (Rx) **414** and Ku-band receiver (Rx) **416** within radome **404.**

In this illustrative example, Ku-band transmitter (Tx) **410** is located opposite of Ku-band receiver (Rx) **416.** In this example, Ka-band transmitter (Tx) **412** and K-band receiver (Rx) **414** are located between Ku-band transmitter (Tx) **410** and Ku-band receiver (Rx) **416.** This positioning of receivers and transmitters provides the greatest separation between a transmitter and a receiver using the same satellite band. In this example, the satellite band is a Ku-band. This configuration reduces interference between the Ku-band transmitter (Tx) **410** and Ku-band receiver (Rx) **416.** Displacement can provide the maximum possible distance between these two components.

This illustration of antennas for phased array antenna system **400** is provided as an illustrative example not meant to limit the manner in which antennas can be positioned in other illustrative examples. For example, Ku-band transmitter (Tx) **410** can be a Ka-band transmitter instead of a Ku-band transmitter, and Ka-band transmitter (Tx) **412** can be a Ku-band transmitter instead of a Ka-band transmitter. In yet another illustrative example, an additional transmitter, an additional receiver, or an additional transmitter and receiver can be part of phased array antenna system **400.**

Further, other components are present but not shown in this example. A base structure, thermal management components, electronics, and other components associated with these antennas can be present although not depicted in this example.

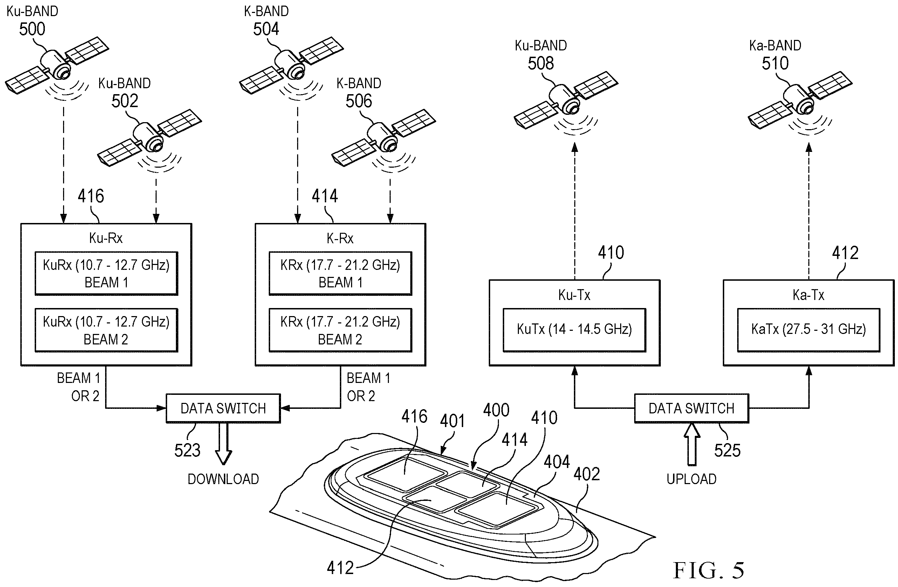

With reference next to **Figure 5****,** an illustration of a schematic diagram for satellite communications with an aircraft satellite communications system using satellites from two services is depicted in accordance with an illustrative example. In the illustrative examples, the same reference numeral may be used in more than one figure. This reuse of a reference numeral in different figures represents the same element in the different figures.

In this example, satellite communications can be provided through the use of satellite services that provide communications including high-speed Internet to passengers and aircraft crew through aircraft satellite communications system **401** on aircraft **402.** In this example, Ku-band transmitter (Tx) **410,** Ka-band transmitter (Tx) **412,** K-band receiver (Rx) **414** and Ku-band receiver (Rx) **416** under radome **404** can be used to receive information from more than one service. In this example, these components are seen in an exposed view of radome **404.**

In this example, these different receivers and transmitters can receive information in beams from satellites operated by different services. Different services may use different satellite bands from other services. With the selection of receivers and transmitters to cover different satellite bands, the ability to transmit and receive information from more than one service is present.

In this illustrative example, Ku-band receiver (Rx)416 can receive information from Ku-band satellite **500** and Ku-band satellite **502.** Further, the receiver in the receivers can simultaneously receive multiple beams from different satellites. This receiver can receive information in one or two beams with a frequency from 10.7 GHz to 12.7 GHz. For example, Ku-band receiver (Rx)**416** can receive information from beam 1 or beam 2 from Ku-band satellite **500** and Ku-band satellite **502.** In this example, K-band receiver (Rx) **414** can receive information in one or two beams with a frequency from 17.7 GHz to 21.2 GHz.

As depicted, K-band receiver (Rx) **414** can receive information from K-band satellite **504** and K-band satellite **506.** K-band receiver (Rx) **414** can receive information from two beams, beam 1 or beam 2 from K-band satellite **504** and K-band satellite **506.** These antennas are connected to optional data switch **523.** This optional data switch can switch between the two receivers to download information.

In this example, information can be uploaded using optional data switch **525,** which sends information to one of Ku-band transmitter (Tx) **410** and Ka-band transmitter (Tx) **412.** In one illustrative example, information can be uploaded to Ku-band transmitter (Tx) **410,** which in turns transmits information to Ku-band satellite **508.** The transmission can occur in a single frequency from frequency band 14.0 GHz to 14.5 GHz.

In another example, optional data switch **525** can send information to Ka-band transmitter (Tx) **412,** which transmits information to Ka-band satellite **510.** This communication can occur using a frequency from 27.5 GHz to 31.0 GHz in this example.

With this arrangement of receivers and transmitters, aircraft satellite communications system **401** is capable of providing communications for an aircraft using more than one service. For example, this aircraft satellite communications system is capable of using two different services because of the receivers and transmitters using different satellite bands of interest. In this example, the satellite bands of interest are Ku-, K-, and Ka-band. Further, the selection of multiple receivers and transmitters rather than a single receiver and transmitter also provides an ability to communicate to multiple targets with a fewer number of elements as compared to wideband apertures.

Further, in other illustrative examples, the data switches depicted in this illustration may be omitted. For example, without optional data switch **523,** the receivers can all receive one to two beams at the same time and be sent directly to the controller or other system for processing multiple beams. For example, K-band receiver (Rx) **414** and Ku-band receiver (Rx) **416** can operate at the same time to receive multiple beams. Each of these receivers can receive 1 or 2 beams at the same time and process these directly with electronics designed to handle multiple beams.

In a similar fashion, without optional data switch **525,** the transmitters can transmit beams at both Ku- and Ka-band at the same time using electronics designed for both bands. With this example, a controller can control uploaded information to both Ku-band transmitter (Tx) **410** and Ka-band transmitter (Tx) **412** and transmit in simultaneous beams in which each transmitter can transmit a beam at the same time as the other transmitter.

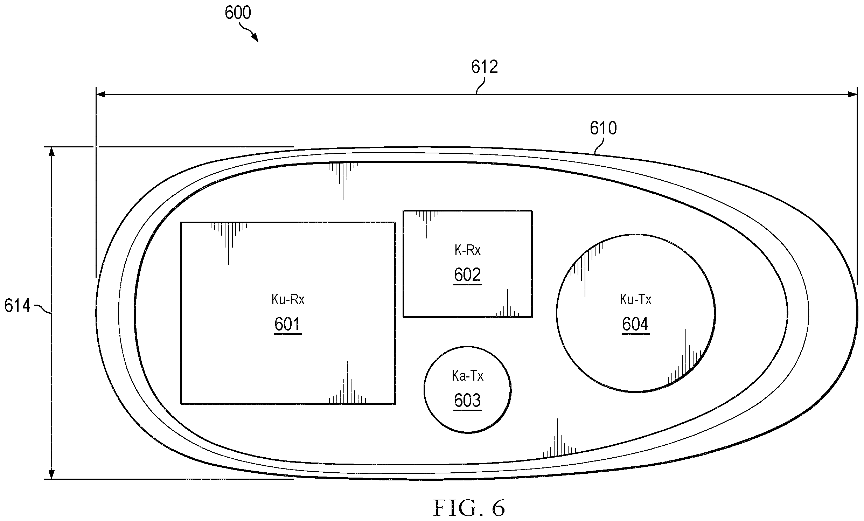

Turning to **Figure 6****,** an illustration of a top view of an aircraft satellite communications system is depicted in accordance with an illustrative example. In this illustrative example, aircraft satellite communications system **600** is an example of an implementation for aircraft satellite communications system **203** in **Figure 2** and aircraft satellite communications system **302** in **Figure 3****.**

In this example, aircraft satellite communications system **600** comprises Ku-band receiver (Rx) elements **601,** K-band receiver (Rx) elements **602,** Ka-band transmitter (Tx) elements **603,** and Ku-band transmitter (Tx) elements **604.** In this example, Ku-band receiver (Rx) elements **601** and K-band receiver (Rx) elements **602** have a rectangular shape. Ka-band transmitter (Tx) elements **603,** and Ku-band transmitter (Tx) elements **604** are shown with a circular aperture shape to reduce the sidelobe levels of an equal amplitude distribution. These components are connected to base structure **610.** It should be understood that the actual shape of each of the elements in aircraft satellite communications system **600** comprising Ku-band receiver (Rx) elements **601,** K-band receiver (Rx) elements **602,** Ka-band transmitter (Tx) elements **603,** and Ku-band transmitter (Tx) elements **604,** may be of other shapes depending upon the specific design. For example, shapes of ovals, or hexagons, or other shapes may also be used as long as these elements all fit into the ARINC 792 standards.

The transmitter and receiver elements are arranged within this base structure in a manner that provides the least amount of interference between the operation of these components. As depicted, Ku-band receiver (Rx) elements **601** are located at opposite ends of the base structure **610** from Ku-band transmitter (Tx) elements **604.** Further in this example, K-band receiver (Rx) elements **602** and Ka-band transmitter (Tx) elements **603** are located on base structure **610** between Ku-band receiver (Rx) elements **601** and Ku-band transmitter (Tx) elements **604.**

As depicted, base structure **610** has length **612** of 96 inches and width **614** of 42 inches. In this example, these dimensions meet the ARINC 792 standard. The dimensions for the transmitter and receiver elements can take different forms that meet the ARINC 792 standard.

This example, K-band receiver (Rx) elements **602** and Ka-band transmitter (Tx) elements **603** are located on base structure **610** between Ku-band receiver (Rx) elements **601** and Ku-band transmitter (Tx) elements **604** which provide a total usable bandwidth of 15 GHz. This bandwidth can be provided using two Ku-band receiver beams, two K-band receiver beams, a Ku-band transmitter beam, and a Ka-band transmitter beam.

When dual beams are received, all of the elements in a receiver may be used to receive the two beams. In this example, every element has a hybrid-coupler providing left- and right-hand polarization to two phase-shifters. Each phase-shifter carries the independent signals to electronics and separate distribution networks for the two independent beams. Thus, all the elements can receive two different beams with the electronics, phase shifters, and distribution networks deriving each individual beam as a separate signal from a specific direction. In one example, all of the elements can be used to receive communications from a GEO, a MEO, or a LEO satellite.

In another example, the aperture can be subdivided into groups of elements to form multiple apertures that are sub apertures for receiving communications with GEO, MEO, or LEO satellites.

In this example, Ku-band, K-band, and Ka-band apertures are selected to fit within the area available on the ARINC 792 standard. In one example, an array of about 2300 elements is selected for a Ku-band single receive aperture in a lattice supporting grating-lobe free scanning to 72 degrees.

Further in this example, a full-duplex operation is provided by Ku-band receiver (Rx) elements **601** and Ku-band transmitter (Tx) elements **604.** In this example, Ku-band receiver (Rx) elements **601** is a single receiver (Rx) aperture with 2300 elements. These elements and corresponding circuitry support dual-beam operation.

In this example, Ku-transmitter (Tx) elements **604** has a single circular aperture with about 1500 elements.

In this example, a full-duplex operation is provided in the K-band using K-band receiver (Rx) elements **602** and Ka-band transmitter (Tx) elements **603.** In this example, K-band receiver (Rx) elements **602** has a single receiver aperture with 2300 elements.

In this example, Ka-band transmitter (Tx) elements **603** has a single transmitter aperture with 2100 elements.

In this depicted example, aircraft satellite communications system **600** can be implemented using approximately 8200 elements within the ARINC-792 footprint. This aircraft satellite communications system provides full-duplex operation. In other words, the system can transmit and receive information at the same time. In one example, aircraft satellite communications system **600** has 2300 elements per satellite band with grating-lobe free scanning to 72 degrees. In one example, this system provides simultaneous dual-beam at Ku-band Rx and K-band Rx with single, switchable beams at Ku-band Tx and Ka-band Tx. This system provides optimized narrow-band, single-function performance.

In the illustrative example, aircraft satellite communications system **600** meets ARINC 792 standards. In meeting this standard, aircraft satellite communications system **600** provides at least one of increased usable bandwidth, uses fewer elements for receivers and transmitters, provides a simpler array implementation for antenna elements, provides independently optimized arrays of elements, or decreased cost as compared to other currently available implementations. One or more of these advantages are provided over other aircraft satellite communications systems meeting ARINC 792 standards.

For example, these advantages can be present as compared to a multiband full duplex aircraft satellite communications system that uses a receiver and a transmitter in which each of these components communicate using satellite bands for communications. This multiband aircraft satellite communications system of two wideband apertures, when compared to the earlier example, uses 230 less area but has 86% more radiating elements.

For comparison, this multiband aircraft satellite communications system has 230 less area and has 86% more elements than aircraft satellite communications system **600.** Further, this multiband aircraft satellite communications system has a higher front-end loss due to wider band requirements on the radiators over the entire scan volume. Full-duplex operation uses Ku-band Rx/Ku-band Tx or K-band Rx/Ka-band Tx. This multiband aircraft satellite communications system provides wideband communication with a single function. This system has a total usable bandwidth of less than or equal to 10.5 GHz.

For further comparison, the advantages of aircraft satellite communications system **600** can be shown over a wideband multiband multifunction aircraft satellite communications system in which a single component operates both as a receiver and a transmitter using the satellite band. This multiband multifunction aircraft satellite communications system uses about 56% less aperture area but uses 50% more elements. This type of system, however, only operates in a half-duplex mode. The system uses a circulator and filter to fit within the unit-cell footprint and a switch to provide sufficient transmit to receive isolation.

This multiband, multifunction aircraft satellite communications system uses 56% less area and has 50% more elements than apertures in aircraft satellite communications system **600.** This system has much-higher front-end losses due to switch and filter needs and with impedance variations over the scan-angles. This system provides a very wideband, multi-function operation with a total usable bandwidth significantly less than 10.5 GHz in half-duplex operation.

In this illustrative example, the wideband, single array in the multiband, multifunction aircraft satellite communications system is smaller in area but requires more elements because the wide-beam scanning requirements are set at the highest operating frequency(31 GHz) as compared to using multiple arrays with a larger footprint but with fewer elements.

The differences in the number of antenna elements affect costs directly. Since, each radiator element includes amplifiers, phase-shifters, controllers, and other components, the multi-band, multi-function will include 50% more components.

In contrast, the multiple single-function, single-band arrays of the illustrative example include fewer elements over a larger aperture area. Therefore, if a sufficient area is present as in the ARINC-792 standard, the multiple arrays of the illustrative example are a much more cost effective affordable solution.

By comparison, using the ARINC-792 standard, a single large multi-function array in a multiband aircraft satellite communications system that covers both transmit and receive and operates from Ku-band to Ka-band requires more elements and is more complex and expensive than the illustrative example. Also, by comparison, a multi-band approach with a single, large receive array which covers Ku-band to the K-band and another transmit array that covers Ku-band to Ka-band will also require more elements and be more complex and more expensive than the illustrative example.

Further in these examples, a Ku-Tx transmitter and Ka-Tx transmitter are the transmit phased-array systems (14 - 14.5 GHz, 27 - 31 GHz). A baseband transmitter operating over a 1 GHz bandwidth can be used in an illustrative example. With this example, a Ku-band up-converter (baseband to 14 GHz) can be used for the Ku-Tx transmitter. This signal is distributed with a radio frequency (FR) network to every radiator element where amplifiers and phase-shifters to augment or amplify the signal for transmission. Similarly, a Ka-band upconverter (baseband to 27 GHz) would be used for the Ka-Tx transmitter. This signal is distributed with a radio frequency (RF) network to every radiator element where amplifiers and phase-shifters augment or amplify the signal for transmission. In addition, the Ka-band upconverter can be tuned to cover the entire 4 GHz of Ka-band bandwidth.

In one illustrative example, a Ku-Rx receiver and a K-Rx receiver are receive phased-array systems (10.7 - 12.7 GHz, 17.7 - 21.2 GHz). If the baseband receiver has a 1GHz bandwidth, a Ku-band down-converter (10.7 to baseband) can be used. With this example, the received signal at every element is amplified, phase-shifted and combined with a radio frequency (RF) network. The aggregated signal is down-converted for the receiver. The down-converter is tuned to cover the entire 2 GHz bandwidth. Similarly, a received Ka-band signal at every radiator element is amplified, phase-shifted and combined with a radio frequency (RF) network. The aggregated signal feeds a Ka-band down-converter (27 to baseband) for the receiver. The down-converter is tuned to cover the entire 4 GHz of bandwidth. The entire analog network from LNA, phase-shifter, RF combiner network is be replicated for each independent beam in these examples.

Aircraft communications systems such as a multiband or multiband multifunction system are potential configurations may provide advantages over currently available aircraft satellite communications systems. However, these aircraft satellite communications systems do not provide communications capabilities and bandwidth as described in one or more of the illustrative examples.

Thus, an aircraft satellite communications system, such as aircraft satellite communications system **600,** that has multiple receivers and multiple transmitters to independently cover the different satellite bands will have less elements, improved power and noise figures (as compared to an amplifier covering a larger operating bandwidth), and therefore better performance. In these examples, sufficient area is assumed to be available for the separate arrays. Furthermore, in the illustrative example, connections from the aircraft to the satellites with up to four receive streams (2 Ku-band streams, 2 K-band streams) and up to 2 transmit streams (Ku-band stream, Ka-band stream) can be used because each array is independent in aircraft satellite communications system **600.**

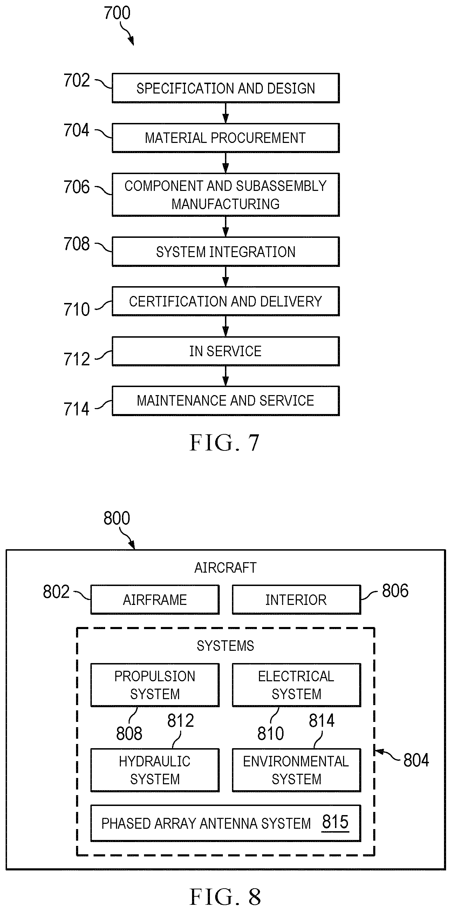

The illustrative examples of the disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method is depicted in accordance with an illustrative example. During pre-production, aircraft manufacturing and service method **700** may include specification and design **702** of aircraft **800** in **Figure 8** and material procurement **704.**

During production, component and subassembly manufacturing **706** and system integration **708** of aircraft **800** in **Figure 8** takes place. Thereafter, aircraft **800** in **Figure 8** can go through certification and delivery **710** in order to be placed in service **712.** While in service **712** by a customer, aircraft **800** in **Figure 8** is scheduled for routine maintenance and service **714,** which may include modification, reconfiguration, refurbishment, and other maintenance or service.

Each of the processes of aircraft manufacturing and service method **700** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft is depicted in which an illustrative example may be implemented. In this example, aircraft **800** is produced by aircraft manufacturing and service method **700** in **Figure 7** and may include airframe **802** with plurality of systems **804** and interior **806.** Examples of systems **804** include one or more of propulsion system **808,** electrical system **810,** hydraulic system **812,** environmental system **814,** and phased array antenna system **815.** Any number of other systems may be included. In this example, phased array antenna system **815** can be implemented using phased array antennas **208** in **Figure 2****.**

Although an aerospace example is shown, different illustrative examples may be applied to other industries. These other industries can be, for example, the ship, spacecraft, or automotive industry.

Apparatuses and methods embodied herein may be employed during at least one of the stages of aircraft manufacturing and service method **700** in **Figure 7****.**

In one illustrative example, components or subassemblies produced in component and subassembly manufacturing **706** in **Figure 7** can be fabricated or manufactured in a manner similar to components or subassemblies produced while aircraft **800** is in service **712** in **Figure 7****.** As yet another example, one or more apparatus examples, method examples, or a combination thereof can be utilized during production stages, such as component and subassembly manufacturing **706** and system integration **708** in **Figure 7****.** One or more apparatus examples, method examples, or a combination thereof may be utilized while aircraft **800** is in service **712,** during maintenance and service **714** in **Figure 7****,** or both. The use of a number of the different illustrative examples may substantially expedite the assembly of aircraft **800,** reduce the cost of aircraft **800,** or both expedite the assembly of aircraft **800** and reduce the cost of aircraft **800.**

For example, components for a phased array antenna system **815** for satellite communications can be manufactured during component and subassembly manufacturing **706** and installed during system integration **708.** As another example, phased array antenna system **815** in the illustrative example can be added during maintenance and service **714.** This addition can be part of modification, reconfiguration, refurbishment, or other maintenance or service of aircraft **800.**

Thus, one or more illustrative examples can provide increased communications for aircraft. The satellite antenna system is implemented as a phased array antenna system in the different examples. This phased array antenna system has multiple transmitters and receivers and can support communications over different satellite bands such as Ku- and Ka-band. This phased array antenna system is packaged to fit within the footprint of an existing radome. However, it can operate without a radome and provides lighting-strike and birdstrike protection. Additionally, the base structure for connecting the phased array antenna system has connectors that correspond to connection points on the aircraft. As a result, certification of the phased array antenna system may be unnecessary.

With the ability to use multiple satellite bands, increased options are available to airlines using aircraft with this phased array antenna system. For example, an airline does not need to change the phased array antenna system on an aircraft based on whether the potential provider uses the Ku-band or Ka-band when the phased array antenna system includes transmitters and receivers for both bands. As a result, having a particular type of hardware is not a limiting factor in the different illustrative examples. Further, the ability to have multiple transmitters and receivers of the same type can increase bandwidth and provide redundancy.

Thus, the illustrative examples provide an improved aircraft satellite communications system that communicates using satellite frequency bands. The satellite frequency bands can cover the desired bands needed to provide service to aircraft from multiple service providers. The aircraft satellite communications system comprises a base structure, transmitters, and receivers. The base structure has connectors arranged to correspond to connection points on an aircraft. The transmitters are connected to the base structure. The transmitters are configured to transmit using a first plurality of the satellite frequency bands. The receivers are connected to the base structure. The receivers are configured to receive using a second plurality of the satellite frequency bands. A selected transmitter in the transmitters transmits using a satellite frequency band in the satellite frequency bands is positioned at a distance from a selected receiver in the receivers using the satellite frequency band in the satellite frequency bands on the base structure with a number of other transmitters and receivers located between the selected transmitter and the selected receiver on the base structure.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. An aircraft satellite communications system (203, 302, 401,600) that communicates using satellite frequency bands (202), the aircraft satellite communications system (203, 302, 401, 600) comprising:
a base structure (210, 310, 610) having connectors (224, 324) arranged to correspond to connection points (226, 326) on an aircraft (201, 301, 401, 801);
transmitters (211) connected to the base structure (210, 310, 610), wherein the transmitters (211) are configured to transmit using a first plurality of the satellite frequency bands (202);
receivers (212) connected to the base structure (210, 310, 610), wherein the receivers (212) are configured to receive using a second plurality of the satellite frequency bands (202); wherein a selected transmitter (214) in the transmitters (211) transmits using a satellite frequency band in the satellite frequency bands (202) is positioned at a distance from a selected receiver (217) in the receivers (212) using the satellite frequency band in the satellite frequency bands (202) on the base structure (210, 310, 610) with a number of other transmitters (211) and receivers (212) located between the selected transmitter (214) and the selected receiver (217) on the base structure (210, 310, 610).

2. The aircraft satellite communications system (203, 302, 401,600) of claim 1, further comprising:
a radome (206, 306) covering the transmitters (211) and the receivers (212) connected to the base structure (210, 310, 610).

3. The aircraft satellite communications system (203, 302, 401,600) of claim 1 or 2, wherein the distance is a maximum physical distance possible between the selected transmitter (214) and the selected receiver (217).

4. The aircraft satellite communications system (203, 302, 401,600) of any one of claims 1-3, wherein the transmitters (211) and the receivers (212) are positioned such that interference between the transmitters (211) and the receivers (212) is reduced.

5. The aircraft satellite communications system (203, 302, 401,600) of any one of claims 1-4, wherein:
the selected transmitter (214) is a Ku-band transmitter (318) and the selected receiver (217) is a Ku-band receiver (316) and wherein the Ku-band transmitter (318) and the Ku-band receiver (316) are located on opposite ends of the base structure (210, 310, 610), and preferably:
the transmitters (211) further comprise a Ka-band transmitter (322) that transmits using a Ka band; wherein the receivers (212) further comprise a K-band receiver (320) that receives using the K band; and wherein the Ku-band transmitter (318) and the Ku-band receiver (316) are located on opposite ends of the base structure (210, 310, 610) and wherein the Ka-band transmitter (322) and the K-band receiver (320) are located between the Ku-band transmitter (318) and Ku-band receiver (316).

6. The aircraft satellite communications system (203, 302, 401,600) of any one of claims 1-4, wherein the selected transmitter (214) is a Ka-band transmitter (322) and the selected receiver (217) is a K-band receiver (320) and wherein the Ka-band transmitter (322) and the K-band receiver (320) are located on opposite ends of the base structure (210, 310, 610)

7. The aircraft satellite communications system (203, 302, 401,600) of any one of claims 1-6, further comprising:
a controller (209) configured to:
subdivide transmit elements (230) in a transmitter in the transmitters (211) into multiple apertures (252);
transmit information from the transmitter (231) in a number of beams (242) using a number of the multiple apertures (252); and preferably:
select an aperture size for an aperture that enables using amplifiers for the transmit elements (230) in the aperture at a power level that saturates the amplifiers for the transmit elements (230) in the aperture in emitting a beam in the number of beams (242) at a satellite with a desired level of power (246) for a satellite type for the satellite.

8. The aircraft satellite communications system (203, 302, 401,600) of any one of claims 1-7, further comprising:
a controller (209) configured to:
subdivide receive elements (250) in a receiver (212) in the receivers (212) into multiple apertures (252); and
receive information from a number of beams (242) using a number of the multiple apertures (252).

9. The aircraft satellite communications system (203, 302, 401,600) of any one of claims 1-8, wherein:
a receiver (212) in the receivers (212) simultaneously receives multiple beams; and/or
the transmitters (211) and receivers (212) are formed from phased array antennas; and/or
the satellite frequency bands (202) used by the aircraft satellite communications system (203, 302, 401,600) form a wideband; and/or
the base structure (210, 310, 610), the transmitters (211), the receivers (212), and the radome (206, 306) meet an ARINC 792 standard.

10. The aircraft satellite communications system (203, 302, 401,600) of any one of claims 1-9, wherein the aircraft (201, 301, 401, 801) is selected from a group comprising a commercial airplane, a cargo airplane, a tilt-rotor aircraft, a tilt wing aircraft, a military air vehicle, a vertical takeoff and landing aircraft, an unmanned aerial vehicle, a drone, an electric vertical takeoff and landing vehicle, and a personal air vehicle.

11. An aircraft satellite communications system (203, 302, 401,600) comprising:
a base structure (210, 310, 610) having connectors (224, 324) arranged to correspond to connection points (226, 326) on an aircraft;
a Ku-band transmitter (318) connected to the base structure (210, 310, 610), wherein the Ku-band transmitter (318) transmits using a Ku satellite band;
a Ka-band transmitter (322) connected to the base structure (210, 310, 610), wherein the Ka-band transmitter (322) transmits using a Ka satellite band;
a Ku-band receiver (316) connected to the base structure (210, 310, 610), wherein the Ku-band receiver (316) receives using the Ku satellite band; and
a K-band receiver (320) connected to the base structure (210, 310, 610), wherein the K-band receiver (320) receives using a K satellite band.

12. The aircraft satellite communications system (203, 302, 401,600) of claim 11, wherein:
the base structure (210, 310, 610) having connectors (224, 324) arranged to correspond to connection points (226, 326) on an aircraft is such that recertification is unnecessary; and/or
the base structure (210, 310, 610), the Ku-band transmitter (318), the Ka-band transmitter (322), the Ku-band receiver (316), and the K-band receiver (320) meet ARINC 792 standard.

13. The aircraft satellite communications system of claim 11 or 12, wherein the base structure (210, 310, 610) is connected to the Ku-band transmitter (318), the Ka-band transmitter (322), the Ku-band receiver (316), and the K-band receiver (320), and wherein the Ku-band transmitter (318), the Ka-band transmitter (322), the Ku-band receiver (316), and the K-band receiver (320) fit within an existing radome (206, 306) of the aircraft (201, 301, 401, 801) when the connectors (224, 324) for the base structure (210, 310, 610) are connected to the connection points (226, 326) on the aircraft (201, 301, 401, 801).

14. The aircraft satellite communications system (203, 302, 401,600) of any one of claims 11-13, further comprising:
a thermal management system.

15. The aircraft satellite communications system (203, 302, 401,600) of any one of claims 11-14, further comprising:
a controller (209) in communication with the Ku-band transmitter (318), the Ka-band transmitter (322), the Ku-band receiver (316), and the K-band receiver (320), wherein the controller (209) is configured to:
control the Ku-band transmitter (318) and the Ka-band transmitter (322) to emit first radio frequency beams (242); and
control the Ku-band receiver (316) and the K-band receiver (320) to receive second radio frequency beams (242) .
